# EUROPÄISCHE PATENTANMELDUNG

(11) **EP 0 816 882 A2**
(43) Veröffentlichungstag der Anmeldung: **07.01.1998**
(21) Anmeldenummer: 97110755.2
(22) Anmeldetag: 01.07.1997
(51) Int. Cl.: G02B 6/36, B32B 31/00

(54) **Optische Vorrichtung mit zusammendrückbarem Laminat**

(30) Priorität: 02.07.1996 DE 19625414
(71) Anmelder: W.L. GORE & ASSOCIATES GmbH, 85636 Putzbrunn (DE)
(72) Erfinder: Schricker, Ulrich, 91154 Roth (DE)
(74) Vertreter: Harrison, Robert John

(57) **Abstract**

The invention relates to an optical device with a first laminate (5) and a second laminate (5) between which is disposed a first plurality of optical components (40) arranged in a first plane, wherein at least one of the first laminate (5) or the second laminate (5) comprises a first layer (10) having high mechanical strength, a second layer (20) having high compressibilty. Preferably the laminate further comprises fixation means (30) for affixing the optical components (40). More preferably the fixation means is an adhesive layer The first layer (10) has a tensile strength of 8000-15000 psi and the second layer (20) has a density between 0.6 g/cm³ and 1.8 g/cm³. Preferably the second layer is made from expanded PTFE. The adhesive layer (30) is either a pressure-sensitive adhesive or is selected from the group of adhesives having the properties that it is tacky at room temperature and pressure and hardens at a temperature between 50°C and 100°C.

## Beschreibung

### Field of the Invention

The invention relates to an optical device with a first laminate and a second laminate between which are disposed a first plurality of optical components.

### Prior Art

Optical devices such as these are known from US-A-5 292 390 (Burack et al.) assigned to AT&T Bell Laboratories. This patent teaches a method of manufacturing an optical device comprising a plurality of optical fibres which are bonded to the upper surface of a flat flexible plastic substrate and are then covered with a plastic material such as polyurethane to form a composite structure. The device taught in this patent has to be compressed in a first step at a first elevated temperature over 100°C and then compressed at a pressure of 25 p.s.i. for one minutes. After cooling, the device is then heated in a second step to 200°C and compressed at a temperature of 6 p.s.i. The purpose of the first step is to ensure good adhesion between the layers of the composite. The second step enables the polyurethane or other thermoplastic layer to melt and snugly encase the optical fibres.

This method has the disadvantage that the optical fibres within the optical device are subjected to high temperatures and pressures. As is well known, optical fibres are very sensitive to pressure and temperature. When subject to stress, cracks on a microscale can occur within the fibre which lead to a deterioration of its performance.

### Object of the Invention

The object of the invention is therefore to provide an optical device which is manufactured by a method in which high temperatures and pressures are avoided.

A further object of the invention is to provide an optical device in which the position of the optical components within the optical device can be easily changed.

### Summary of the Invention

These and other objects of the invention are solved by using as laminates for the optical components a first laminate and a second laminate either of which comprise a first layer having high mechanical strength, a second layer having high compressibility. Preferably the laminates have have a fixation means for affixing the optical components. More preferably this fixation means comprises an adhesive layer.

The first layer is designed to provide mechanical strength to the optical device to ensure that the device and the optical components within the device are protected from damage by longitudinal forces being applied to the device. The second layer acts as a cushion to support the optical components within the device. It absorbs much of the stress to which the optical device is subjected when it is bent or when pressure is applied to the surface of the optical device.

In one embodiment of the invention the optical device further comprises a second plurality of optical components being arranged in the same plane as the first plurality of optical components and crossing at least one of said plurality of optical components. An optical device in which optical components such as optical fibres cross each other is known from US-A-5 204 925 (Bonanni et al) assigned to AT&T Bell Laboratories, Murray Hill, New Jersey. The laminates described in this invention offer the advantage that damage to the optical components within the optical device is reduced compared to the prior art device since the second layer can absorb much of the point stress on the optical components at the point at which the optical components cross each other.

The optical device with a second plurality of components can be further provided with a third laminate also comprising a layer having high compressibility and at least one adhesive layer for affixing the optical components. In the device according to this embodiment, all direct crossing points of the optical components are eliminated and thus mechanical point stress is substantially reduced. The third laminate acts as a further cushion to absorb the mechanical stresses.

Advantageously the layer has a tensile strength of 8000-15000 p.s.i., preferably 12000 p.s.i. and is made of polyester. The second layer should have a porosity between 18% and 73%. It is made from the group of polymers consisting of expanded PTFE, polyethylene foams, polyester membranes, silicone and polyurethane foams. Preferably the second layer is made from expanded PTFE (ePTFE). Expanded PTFE has the advantage that it has a very low thermal coefficient of expansion and is chemically inert. It therefore protects the optical components from damage by chemicals and other environmental influences.

The adhesive layer can be either a pressure sensitive adhesive or is selected from the group of adhesives having the properties that it is tacky at room temperature and pressure and hardens at a temperature between 50°C and 100°C. This allows the optical components to be laid on the surface of the laminates and their position changed during the manufacturing process. After heating the laminate to a temperature above the curing temperature of the adhesive, the adhesive hardens and affixes the optical components. Even after cooling of the optical device, the optical components remain fixed in their position. Compared to the prior art methods known from US-A-5 292 390, the optical components are not heated to a high temperature and thus damage to the optical components is eliminated. Optical fibres, for example, are generally specified to operate at a temperature up to 120°C. The advantage of ePTFE is furthermore illustrated in this manufacturing method since ePTFE has a very low coefficient of thermal expansion and thus does not expand when the optical device is heated to a temperature to cure the adhesive.

The adhesive layer is preferably an adhesive tape selected from the group of adhesive tapes containing silicon, epoxy or acrylic adhesive soaked in ePTFE or an applied adhesive film being selected from the group of acrylic, silicone or epoxy adhesives.

### Description of the Drawings

Fig. 1 shows a cross-sectional view of a laminate for optical components according to the invention.

Fig. 2 shows a cross-sectional view of a laminate for optical components together with an intermediate layer.

Fig. 3A shows a cross-sectional view of an optical device using the laminate of the invention.

Fig. 3B shows a cross-sectional view of an optical device using the laminate of the invention in which the compressibility of the laminate is illustrated.

Fig. 4 shows a cross sectional view of a laminate for optical components together with an intermediate layer in which the optical fibres cross each other.

### Detailed Description of the Invention

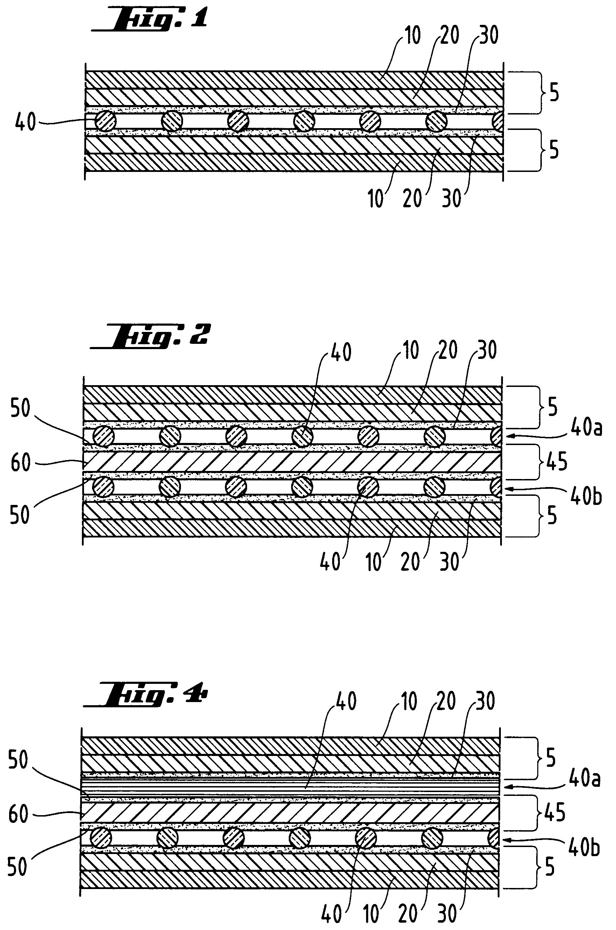

A laminate 5 for optical components according to the invention is shown in Fig. 1. The laminate consists of a first polymer layer 10 which is laminated to a second polymer layer 20 and which is coated on at least one side with an adhesive layer 30. In Fig. 1 the laminate 5 is used in an illustrative manner to enclose a plurality of optical fibres 40. The laminate 5 could also be used to enclose other optical components such as optical amplifiers or wave guides.

The first polymer layer 10 is chosen to provide the laminate 5 with high mechanical strength to resist damage to the enclosed optical components 40 due to mechanical stress on the laminate 5. Such mechanical stress may be caused by longitudinal forces exerted on the laminate by external influences. In order to provide sufficient mechanical strength, the first polymer layer needs to have a high tensile strength. A tensile strength of 8000-15000 psi, preferably 12000 psi, is sufficient to provide adequate mechanical protection. Furthermore, the coefficient of thermal expansion for the first polymer 10 should be similar to that of the optical components 40. A suitable polymer for use has been found to be polyester. However, other polymers having the required properties can be also used. One example of such a suitable polymer material is MIL-ENE® available from W.L.Gore & Associates.

The second polymer layer 20 is chosen to provide the laminate 5 with buffering properties in order to protect the enclosed optical components 40 from shear stresses. These stresses can be caused by bending the laminate 5 or by applying pressure to the surface of the laminate 5. In order to provide sufficient buffering properties, the second polymer layer needs to have a high compressibility. It has been found that microporous material with a density of between 0.6 g/cm³ and 1.8 g/cm³ is sufficient to provide adequate buffereing properties. Furthermore, the coefficient of thermal expansion should be similar to that of the optical components 40 and to that of the first polymer 10. A suitable polymer for use has been found to be a microporous polymer. Examples of such polymers are expanded PTFE, polyester membranes, silicone, polyethylene foams and polyurethane foams. Preferably expanded PTFE expanded PTFE is used which has a density between 0.6 g/cm³ and 1,8 g/cm. The polymer has therefore an air porosity between 18% and 73%. The expanded PTFE used is preferably that disclosed and described in US-A-3 953 566, US-A-3 962 153, US-A-4 096 227 and US-A-4 187 390, One example of such a material is sold under the trade name GORE-TEX® by W.L.Gore & Associates.

The first polymer layer 10 and the second polymer layer 20 are laminated together by coating the first polymer layer 10 with a thermoplastic adhesive and applying pressure and heat to the laminate. Suitable thermoplastic adhesives can be selected from the group of adhesives containing polyester-based adhesives, polyurethane adhesives, fluorinated ethylene-propylene copolymers (FEP) adhesives, perfluoroalkyl ethers of PTFE polymers suitable thermoplastic adhesive is already applied to the MIL-ENE® polymer layers available from W.L.Gore & Associates. The temperature and pressure which have to be applied depend on the composition of the thermoplastic adhesives.

Alternatively, a pressure sensitive adhesive could be used to laminate the first polymer layer 10 to the second polymer layer 20. Examples of such tapes are manufactured by the 3M Corp. of St. Paul, Minnesota, and are made from a modified acrylic adhesive. They are sold under the brand name SCOTCH™. In this method, a pressure-sensitive adhesive tape is placed on the surface of the first polymer layer 10. On the pressure-sensitive adhesive tape, the second polymer layer 20 is placed. Pressure is then applied to the surface of the second polymer layer 20 and the first polymer layer 10 and the second polymer layer 20 then become laminated together.

After laminating the first polymer layer 10 and the second polymer layer 20 together, an adhesive layer 30 as a fixation means is applied to the surface of the second polymer layer 30. The adhesive 30 is used to attach the optical components 40 to the laminate 5. It is chosen such that it is tacky at room temperature but can be made hard by heating the laminate 5 and optical fibre 40 to a temperature below that at which the optical component is destroyed. The optical flbre 40 could, for example, be an acrylic-coated glass fibre which has a specified melting temperature of 125°C. The adhesive 30 used in this case needs to set at a temperature of less than around 120°C to avoid damaging the optical component when heat curing the laminate 5 to set the adhesive 30.

Preferably the adhesive 30 should set at a lower temperature since the greater the temperature to which the optical component 40 is heated to minimise the thermal stress to which the component is subjected. This thermal stress can cause degradation of the performance of the optical component 40 even if not destroying it completely. Preferably the adhesive is therefore chosen to set at a temperature of around 80°C. Suitable adhesives for use are selected from the group of adhesive consisting of acrylic-based adhesives, silicone-based adhesives and epoxy-based adhesives. Such adhesives include epoxy-dicyanamide, silicone or cyanacrylate. These adhesives can be applied as a layer on the surface of the second polymer 20. The application can be done, for example, by spraying or coating the surface of the second polymer 20. Alternatively, the adhesive layer 30 can be made by soaking a thin film of a porous polymer such as expanded PTFE or polyester in one of the above adhesives to form a pressure-sensitive adhesive tape. Such pressure sensitive adhesive tapes have the advantages that the optical components 40 can be placed on the adhesive layer 30 and will be held in place but can be removed. Only after applying pressure do the optical components 40 become permanently attached to the adhesive tape. As mentioned above, pressure-sensitive adhesive tapes are manufactured by the 3M Corp. and sold under the brand name SCOTCH™.

The discussion above has assumed that the adhesive layer 30 was attached to the surface of the second polymer 20. However, the adhesive layer 30 could equally well be attached to the surface of the first polymer 10 without affecting the operation of the invention.

In the above illustrative example, it was assumed that the optical component 40 was an acrylic coated glass fibre. However the invention can also find application with quartz or plastic fibres. The coating on the glass cladding may optionally be a silicon, acrylic, polyimide or other release agent and a polymer coating.

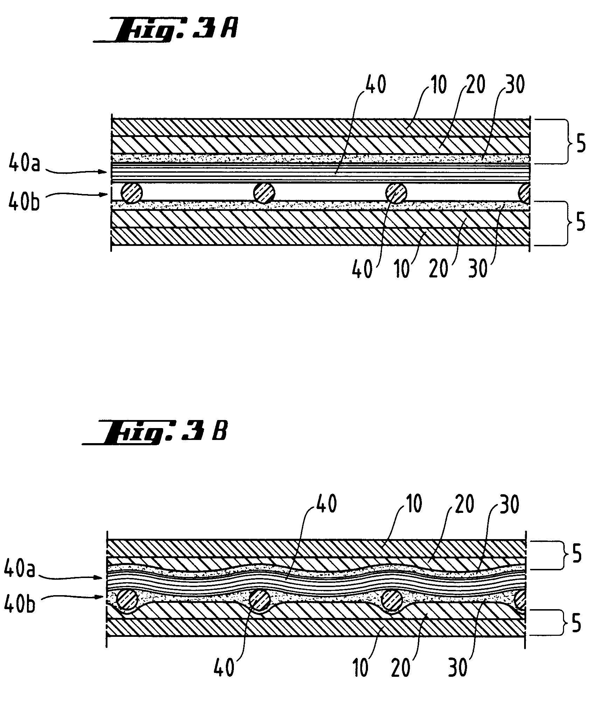

The laminate 5 as described above can find application in multi-layer optical circuits such as that illustrated in Fig. 2 in which a plurality of optical fibres 40 are sandwiched between laminates 5. In this figure, the same reference signs are used to designate the same items as in Fig. 1. Between the two layers 40a and 40b comprising a plurality of optical fibres 40, an intermediate layer 45 is placed. The intermediate layer 45 comprises a layer of microporous material 60 is placed which is coated on both sides with a further layer of adhesive 50 as a further fixation means. The microporous layer can be made from a polymer such as expanded PTFE, polyester foam or polyurethane foam which is able to absorb mechanical stress. The microporous material is preferably made from expanded PTFE with a density between 0.6g/cm³ and 1.8 g/cm³. Such material is sold by W.L.Gore and Associates under the trade name GORE-TEX®. This material acts as a buffer layer absorbing stresses between the optical fibres. The adhesive layer is made from the same type of adhesive as the adhesive layers 30.

In Fig. 2, the optical fibres are shown running parallel to each other in the adjacent layers. The laminate 5 is particularly useful in optical devices in which the optical fibres 40 cross each other as is illustrated in Fig. 3A and Fig 3B. Fig. 3A is a stylistic figure to illustrate the construction of the optical device. In accordance with the invention, however, the layers will be second layer 20 will be compressed as shown in Fig. 3B in order to absorb the load of the optical fibre 40. The first polymer layer 10 will also be slightly deformed. However, it does not offer the same advantages of compressibility and thus is shown as being uncompressed in this figure. In Figs. 3A and 3B, the optical fibres 40 are shown crossing each other directly. For better protection from mechanical damage, the laminate 5 can be used with the intermediate layer 45 to separate the optical fibres 40 as shown stylistically in Fig. 4. This embodiment of Fig. 4 has the advantage that the point load on each optical fibre 40 at the crossing point is greatly reduced since the optical fibres 40 do not touch each other directly. The crossing points of the optical fibres 40 are thus buffered. This reduces greatly the mechanical stress on the individual optical fibres 40. In practice, the second polymer layers 20 of the embodiment of Fig. 4 will also be compressed as was illustrated in Fig. 3B. This is, however, not shown on the figure for reasons of simplicity.

The laminate 5 and intermediate layer 45 can be used to manufacture routing devices such similar to those illustrated in US-A-5204925. In the routing device disclosed in this patent document, the optical fibres are placed in the same plane and cross each other which, as mentioned above, leads to mechanical stress on the optical fibres. Using the laminate 5 of the current invention, the optical fibres can be arranged in a plurality of planes such as shown in Fig. 4, each plane being separated by a laminate. Buffering the optical fibres 40 using the invention described above reduces the mechanical stresses on the crossing points of the fibres which leads to reduced mechanical damage to the fibres and thus longer product life as well as less transmission loss within the optical fibres 40.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. Optical device with
a first laminate (5) and a second laminate (5) between which is disposed a first plurality of optical components (40a, 40b) arranged in a first plane,
wherein at least one of the first laminate (5) or the second laminate (5) comprises a first layer (10) having high mechanical strength and a second layer (20) having high compressibility.

2. Optical device according to claim 1 wherein the first laminate (5) or the second laminate further comprises fixation means (30) for affixing the optical components (40).

3. Optical device according to claim 2 wherein said fixation means comprises an adhesive layer (30).

4. Optical device according to claim 1 further comprising
a second plurality of optical components (40a) being arranged at least partly in an adjacent plane as the first plurality of optical components (40b), wherein at least one of said second plurality of optical components (40a) crosses at least one of said first plurality of optical components (40b).

5. Optical device according to claim 1 further comprising
a second plurality of optical components (40a) being arranged in a second plane different from said first plane, wherein the first plane and second plane are separated from each other by a third laminate (45), the third laminate (45) comprising a layer (60) having high compressibility.

6. Optical device according to claim 5 wherein the third laminates further comprises at least one further fixation means (50) for affixing the optical components (40).

7. Optical device according to claim 6 wherein the at least one fixation means is a further adhesive layer (50).

8. Optical device according to any of the above claims wherein said first layer (10) has a tensile strength of 8000-15000 psi.

9. Optical device according to claim 8 wherein said first layer (10) has a tensile strength of 12000 psi.

10. Optical device according to one of any of the above claims wherein said first layer (10) is made from polyester.

11. Optical device according to any of the above claims wherein said second layer (20) is porous.

12. Optical device according to claim 11 wherein said second layer (20) has a porosity between 18% and 73%.

13. Optical device according to any of the above claims wherein said second layer (20) is selected from the group of polymers consisting of expanded PTFE, polyethylene foams, polyester membrane, silicones and polyurethane foams.

14. Optical device according to claim 13 wherein said second layer (20) is expanded PTFE.

15. Optical device according to any claims 3 to 14 wherein said adhesive layer (30) or said further adhesive layer (50) is selected from the group of adhesives having the properties that it is tacky at room temperature and pressure and hardens at a temperature between 50°C and 100°C.

16. Optical device according to claim 15 wherein said adhesive layer (30) or said further adhesive layer (50) hardens at a temperature between 70°C and 85°C.

17. Optical device according to any one of claims 3 to 14 wherein said adhesive layer (30) or said further adhesive layer (50) is a pressure-sensitive adhesive

18. Optical device according to any one of claims 15, 16 or 17 wherein said adhesive layer (30) or said further adhesive layer (50) is formed from an adhesive tape.

19. Optical device according to claim 18 wherein said adhesive tape is selected from the group of adhesive tapes containing silicon, epoxy or acrylic adhesive soaked or coated in ePTFE.

20. Optical device according to claim 15 or 16 wherein said adhesive layer (30) is formed from an adhesive being selected from the group of acrylic, silicone or epoxy adhesives.

21. Optical device according to any of the above claims wherein said optical component (40) is a glass fibre

22. Optical device according to claim 21 wherein said optical fibre is stable to a temperature of up to at least 100°C.

23. Optical device according to claim 22 wherein said glass fibre (40) is stable to a temperature of up to at least 85°C.
